# EUROPEAN PATENT SPECIFICATION

(11) **EP 4 106 364 B1**
(45) Date of publication and mention of the grant of the patent: **19.02.2025**
(21) Application number: 21179268.4
(22) Date of filing: 14.06.2021
(51) Int. Cl.: H04W 4/80, H04W 88/02, H04W 24/02, H04W 88/04, H04W 16/18, H04W 4/021

(54) **METHODS FOR A COMMUNICATION DEVICE FOR LINE-OF-SIGHT COMMUNICATION, APPARATUS, VEHICLE AND COMPUTER PROGRAM**
VERFAHREN FÜR EINE KOMMUNIKATIONSVORRICHTUNG FÜR SICHTLINIENKOMMUNIKATION, GERÄT, FAHRZEUG UND COMPUTERPROGRAMM
PROCÉDÉS POUR UN DISPOSITIF DE COMMUNICATION POUR UNE COMMUNICATION À LIGNE DE VISÉE, APPAREIL, VÉHICULE ET PROGRAMME INFORMATIQUE

(43) Date of publication of application: 21.12.2022
(73) Proprietor: VOLKSWAGEN AG, 38440 Wolfsburg (DE); Seat, S.A., 08760 Martorell (ES)
(72) Inventor: PFADLER, Andreas, 13357 Berlin (DE); MONTERO BAYO, Luca, 08028 Barcelona (ES)
(74) Representative: 2SPL Patentanwälte PartG mbB

(56) References cited:
- GB-A- 2 532 966
- JP-A- H07 154 856
- US-A1- 2012 059 578
- US-A1- 2021 007 104

## Description

The present disclosure relates to the field of wireless communication. Embodiments relate to methods for a communication device for line-of-sight (LOS) communication, an apparatus, a vehicle and a computer program, more particularly, but not exclusively, to a concept for providing a LOS map.

The use of higher frequency bands in communications implies propagating in a harsher channel, where the free-space path loss scales with (*f*²), and shading by obstacles and atmospheric effects (i.e., water vapor and oxygen absorption, or rain) take a non-negligible role. To enable a reliable and efficient communication at mmWave one desires to Line-of-Sight (LOS) between two communication nodes. A communication node is a transceiver with the capability to transmit and receive, e.g. a vehicle, User Terminal (UT), Base Station (BS) etc. Communication nodes at mmWave bands may use beamforming with high antenna gains to overcome the path loss and to reduce interference between different nodes.

The development of the 5th-generation mobile communication standard (5G) of the 3rd-Generation Partnership Project (3GPP) has brought increased attention to the automotive industry, as vehicular communications are expected to leverage the most advanced features of the new generation of wireless communications. Among the main novelties of 5G, a wider range of usable spectrum (currently licensed up to the 28 GHz band - the first-ever Millimeter wave band for mobile use), enhanced support for high mobility scenarios and new mechanisms to guarantee and predict the experienced Quality of Service (QoS), have been established as key functions to support an increasingly connected transportation ecosystem. Besides, the latest standard release (Rel. 16) has given support to Vehicle-to-Everything (V2X) communications with New Radio (NR) technology, allegedly allowing vehicles to make use of the same spectrum options, even for Vehicle-to-Vehicle (V2V) use cases.

KR20190006392 shows a relay device in a time division duplex (TDD) method to secure a between a base station antenna and terminals for a millimeter wave mobile communication service. The relay device to secure a LOS in a dynamic TDD method for a 5G network comprises a doner unit having a doner antenna arranged in an LOS for a plurality of base stations and a service unit having a service antenna arranged in LOS for a plurality of terminals.

US 2016 / 0174 258 A1 shows a method for establishing a millimeter wave wireless communication link, comprising a terminal source sending an omnibearing request to send to a terminal sink, carrying location information of the terminal source relative to a mediation device obtained by the terminal source performing signaling interaction with the mediation device in the omnibearing request to send.

US 2019 / 0191 419 A1 shows a system that employs millimeter-wave (mmWave) to microwave Multiple-Input Multiple-Output (MIMO) relay in a wireless communication environment comprising a base station, a relay unit, and a plurality of indoor transceivers. The based has a plurality of mmWave transceivers. The relay unit is located outside a building and configured to receive and amplify mmWave signals from the mmWave transceivers of the base station. The plurality of indoor transceivers is located inside the building and configured to operate for microwave signals, so that the relay unit and indoor transceivers configured to form a microwave MIMO link that operates in a spatial multiplexing manner.

GB 2 532 966 A discloses a pilotless drone for maintain a line-of-sight communication. Where a simultaneous connection to user equipment and a base station is not possible the drone may move to alternately enable each wireless connection. The drone may store one parameter relating to at least one of at least one wireless connection, a location of the user equipment, a location of the base station, a geographic feature and an audio signal emitted by the user equipment for navigating. Further, the drone may navigate to a desired position based on signal strength of signals from the user equipment and/or the base station and may consider stored map information.

US 2021/007104 A1 discloses a first user equipment identifying a trigger condition associated with a first communication link with a base station and establishes a second communication link with a second user equipment. The first user equipment may transmit a relay request to the second user equipment based on the trigger condition, wherein the relay request instructs the second user equipment to relay communications for the first user equipment. The first user equipment communicates with the base station via the second communication link. Further, document D2 discloses several factors for identifying if a service as relaying system can be offered, namely a battery level at the UE, available bandwidth, LOS conditions, traffic generated by a user of the UE, a communication mode of the UE, a reason for the UE to request the relay, or the like.

US 2012 / 059 578 A1 discloses a routing system that can be configured to determine a route based on availability and reliability of location reference devices to determine a most reliable route between a source and a destination. Visibility information that is indicative of availability of at least a threshold number of location reference devices along the route can be determined.

JP H07154856 A discloses a mobile terminal calculating a present position from the signals of a GPS satellite in a position calculation circuit, predicting the position of a moving destination hereafter by a speed/acceleration sensor and a bearing sensor, referring to the perspective map information of a communication satellite of a data base and predicting a time band when communication with the communication satellite by an antenna becomes possible.

Due to the high attenuation of mmWave a LOS condition between two communication devices is desired for communication purposes between both communication devices. In the case of non-LOS condition a first communication device is not necessarily able to communicate with a third communication, as some NLOS cases may cause a substantial loss of received power. Therefore, as mmWave links are most effective (and rather require) LOS conditions, a communication between the first communication device and the third communication device in NLOS can be accomplished by relaying on a second communication device that has LOS with both the first communication device and the third communication device. A LOS relaying between the first communication device and the third communication device at mmWave bands requires LOS and may require beamforming to overcome the higher path losses. However, neither the first communication device nor the third communication device knows that a LOS connection between both is possible via using the second communication device as a relay system.

It is therefore a finding that LOS communication can be improved by generating a LOS map. The LOS map may be used to inform the first communication device and/or the second communication device about the presence of a third communication device which can act as relay system between both. Thus, a LOS connection between the first communication device and the second communication can be established in an improved way.

The solution is specified by the claims.

Some examples of apparatuses and/or methods will be described in the following by way of example only, and with reference to the accompanying figures, in which
Fig. 1 shows an example of a method for a first communication device;
Fig. 2 shows another example of a method for a communication device;
Fig. 3 shows another example of a method for a second communication device;
Fig. 4 shows a block diagram of an apparatus; and
Fig. 5 shows an example of a usage of a LOS map.

Some examples are now described in more detail with reference to the enclosed figures.

However, other possible examples are not limited to the features of these embodiments described in detail. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an 'or', this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

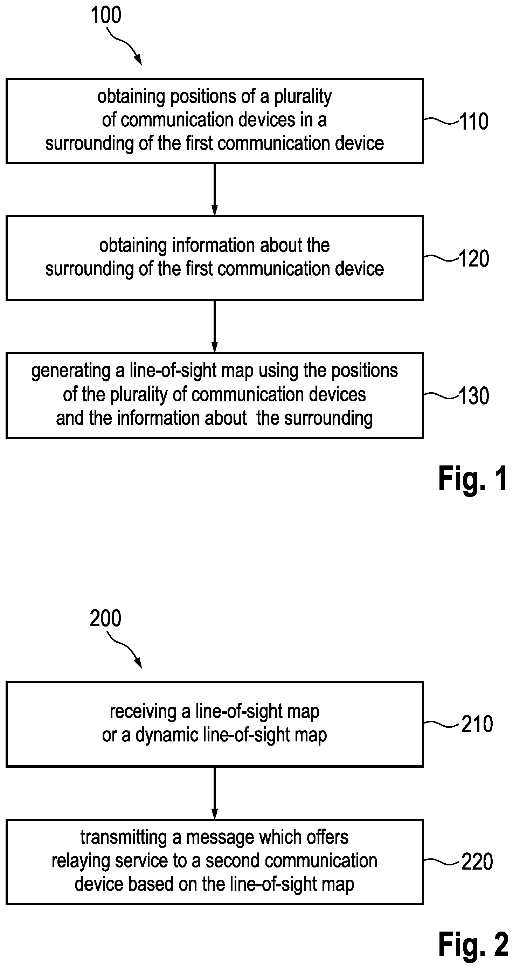

Fig. 1 shows an example of a method 100 a first communication device. The method 100 for line-of-sight communication in a communication system comprising at least a second communication device comprises obtaining 110 positions of a plurality of communication devices in an environment of the first communication device. Further, the method 100 comprises obtaining 120 information about the environment of the first communication device and generating 130 a line-of-sight map using the positions of the plurality of communication devices and the information about the environment.

The mobile communication system may be cellular. The term cell refers to a coverage area of radio services provided by a transmission point, a remote unit, a remote head, a remote radio head, a base station, the first communication device, the second communication device or a NodeB, an eNodeB, respectively. The terms cell and base station may be used synonymously. In some examples a cell may correspond to a sector. For example, sectors can be achieved using sector antennas, which provide a characteristic for covering an angular section around a base station or remote unit. In some examples, a base station or remote unit may, for example, operate three or six cells covering sectors of 120° (in case of three cells), 60° (in case of six cells) respectively. Likewise a communication device, such as the first/second communication device, may establish one or more cells in its coverage area. A communication device can be registered or associated with at least one cell, i.e. it can be associated to a cell such that data can be exchanged between the network and the mobile in the coverage area of the associated cell using a dedicated channel, connection or connection. A first communication device may hence register or be associated with the second communication device and/or vice versa, such as base station directly or indirectly, where an indirect registration or association may be through one or more first/second communication devices.

Such a first/second communication device may, for example, correspond to a relay as defined in 3GPP Release 10 and following, e.g., a moving relay or mobile relay as introduced in connection with 3GPP Release 12 and following, a wireless repeater (analog or digital), or a femto cell with a wireless backhaul connection. In case of a femto cell, the wireless backhaul connection could be provided over a separate cellular communication terminal, e.g., a 2G/3G/4G/5G modem. It is another finding that for the relay connection and for the access connection, respectively, the same or different frequency and spectrum resources can be used.

In general, a first/second communication device is a device that is capable of communicating wirelessly. In particular, however, the first/second communication device may be a mobile first/second communication device, i.e., a first/second communication device that is suitable for being carried around by a user. For example, the first/second communication device may be a User Terminal (UT), User Equipment (UE), relay system of a vehicle, base station etc. within the meaning of the respective communication standards being used for mobile communication. For example, the first/second communication device may be a mobile phone, such as a smartphone, or another type of mobile communication device, such as a smart-watch, a laptop computer, a tablet computer, or autonomous augmented-reality glasses. For example, the first/second communication device may be configured to communicate in a cellular mobile communication system. Accordingly the first/second communication device may be configured to communicate in a cellular mobile communication system, for example in a Sub-6GHz-based cellular mobile communication system (covering frequency bands between 500 MHz and 6 GHz) or in a mmWave-based cellular mobile communication system (covering frequency bands between 20 GHz and 60 GHz). For example, the first/second communication device may be configured to communicate in a mobile communication system / cellular mobile communication system. In general, the mobile communication system may, for example, correspond to one of the Third Generation Partnership Project (3GPP)-standardized mobile communication networks, where the term mobile communication system is used synonymously to mobile communication network. The mobile communication system may correspond to, for example, a 5th Generation system (5G), a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16, generally an Orthogonal Frequency Division Multiple Access (OFDMA) network, a Time Division Multiple Access (TDMA) network, a Code Division Multiple Access (CDMA) network, a Wide-band-CDMA (WCDMA) network, a Frequency Division Multiple Access (FDMA) network, a Spatial Division Multiple Access (SDMA) network, etc.

In addition the first/second communication device may be suitable for, or configured to, communicating/communicate via non-cellular communication systems, e.g. via a device-to-device vehicular communication system, e.g., according to the IEEE 802.11p standard (Institute of Electrical and Electronics Engineers standard 802.11p for vehicular communication) or via a wireless local area network (e.g., according to IEEE 802.11a, IEEE 802.11b, IEEE 802.11g, IEEE 802.11n, IEEE 802.11ac or IEEE 802.11ax, also known as Wi-Fi 1 through Wi-Fi 6(E)). In particular, the first/second communication device may be suitable for, or configured to, communicating/communicate in the frequency band between 5 GHz and 7.1 GHz, which covers communication in the 5 GHz band (for WiFi in the 5 GHz band), 5.9 GHz band (for vehicular communication according to the 802.11p standard) and between 5.9 GHz and 7.1 GHz (for WiFi in the 6 GHz band).

The plurality of communication device may comprise the first communication device and/or the second communication device.

Obtaining 110 positions of a plurality of communication devices in an environment of the first communication device can be done at least partially in advance, e.g., by downloading/loading a map with data about communication devices, e.g., base stations. Thus, the plurality of communication devices may be given by the map. Optionally or alternatively, the first communication device may obtain the information about the plurality of communication devices in real-time, e.g., by a measurement. For example, the measurement may be performed using one or more sensors of the first communication device. The one or more sensors may belong to a wide variety of UE sensors, e.g. a radar sensor, a lidar sensor, automotive radar, ultrasound sensor or a vision-related sensor such as camera or infrared sensors.

Optionally or alternatively, the first communication device may receive the (real-time) information about the plurality of communication devices, e.g., by another communication device in the environment of the first communication device. For example, the (real-time) information about the plurality of communication devices may be received from a communication device of the communication system, e.g., from the second communication device, a vehicle, an infrastructure, a smartphone, a base station etc.

Obtaining 120 information about the environment of the first communication device can be done at least partially in advance, e.g., by downloading/loading a map with data about communication devices, e.g., base stations. The information about the environment can be rather (or fully) static, e.g., determined by a map considering immobile obstacles (e.g., infrastructure like house, traffic light etc.) and/or rather dynamic, e.g., determined by sensor data considering, e.g., movement speeds of mobile obstacles (e.g. vehicles, pedestrian, cyclist etc.) in the environment. For example, the first communication device may download a map of a downtown area and may combine position data determined by the first communication device (e.g., using global positioning system, GPS) and/or provided by a user with the map to determine an environment of the first communication device.

Optionally or alternatively, the first communication device may obtain the information about the environment in real-time, e.g., by a measurement. For example, the measurement may be performed using one or more sensors of the first communication device. The one or more sensors may belong to a wide variety of UE sensors, e.g. a radar sensor, a lidar sensor, automotive radar, ultrasound sensor or a vision-related sensor such as camera or infrared sensors.

Optionally or alternatively, the first communication device may receive the (real-time) information about the environment, e.g., by another communication device in the environment of the first communication device. For example, the (real-time) information about the environment may be received from a communication device of the communication system, e.g., from the second communication device, a vehicle, an infrastructure, a smartphone, a base station etc.

For example, obtaining 110 information about the plurality of communication devices and/or obtaining 120 information about the environment is partially or fully performed in real-time. For example, obtaining 110 information about the plurality of communication devices and/or obtaining 120 information about the environment comprises obtaining real-time information about the plurality of communication devices and/or the environment, respectively. For example, information about the plurality of communication devices based on map data may be combined with real-time information (e.g., determined by measurement or received from another communication device, which this has determined e.g., by measurement).

Generating 130 a line-of-sight map using the positions of the plurality of communication devices and the information about the environment can be done by a processing circuitry of the first communication device. Thus, the first communication device can generate a (real-time) LOS map, which can be used, e.g., to determine communication devices which can act as relay systems. Therefore, a LOS communication between communication devices with NLOS condition can be improved by relaying. Generating a LOS map may also comprise editing/updating an existing LOS map.

In an example, the method 100 may further comprise obtaining dynamic information of at least one communication device of the plurality of communication devices and/or of the first communication device and generating a dynamic line-of-sight map using the positions of the plurality of communication devices, the information about the environment and the dynamic information. For example, the dynamic information may depend on a time and/or vary with a time. For example, a communication device of the plurality of communication devices may be out of service for a predefined time due to maintenance. Thus, for this time the maintained communication device may be not available as relay system. For example, a communication device of the plurality of communication devices may be mobile (e.g., a vehicle comprising a communication device) and thus the dynamic information may reflect a movement of the mobile communication device, e.g., a movement speed, a planned departure (e.g., at a red traffic light or at a bus stop etc.).

For example, the information about the environment may solely depend on a dynamic parameter, which can be easy determined, e.g., a movement speed of the first communication device (e.g., based on a planned route) and static information about the environment (e.g., determined by a map). Thus, the determination of the environment may be performed with less computational resources and/or without a need of further sensors. This may be advantageously in an environment with low density of obstacles, e.g., an open landscape, resulting in an eased determination of the environment. In principle an obstacle, can be an object in the line-of-sight between the UE and the communication device and/or an object in a location that cause non-negligible change in the electromagnetic field at the UE or the communication device.

The information about the environment/plurality of communication device can be fully static, e.g., determined by a map considering immobile obstacles (e.g., infrastructure like house, traffic light etc.) and/or immobile communication devices. The dynamic information about the environment/plurality of communication device can be rather dynamic, e.g., determined by sensor data considering, e.g., movement speeds of mobile obstacles (e.g. vehicles, pedestrian, cyclist etc.) in the environment and/or mobile communication devices. For example, the dynamic LOS map may solely depend on a movement speed of the first communication based (e.g., based on a planned route) and static information about the environment/plurality of communication device (e.g., determined by a map).

For example, based on the dynamic LOS map the first communication device can predict an entry and/or exit of a communication device into a coverage area of the first communication device. Thus, the first communication device may be enabled to schedule different communication devices for different times to act as relay system. For example, the first communication device may move on a planned route and may determine its movement speed. Further, the first communication device may have received a map with information about the plurality of communication devices, e.g., base stations, along the route. Thus, the first communication device may be enabled to plan connections to the different communication devices along the route based on the dynamic information and the static information, e.g., the movement speed of the first communication device and a map comprising base stations.

For example, the first communication device may act for a mobile second communication device as relay system and the mobile second communication device may move away from the first communication device. Thus, the first communication device can predict a time during which it still can act as relay system for the mobile second communication device e.g., before the mobile communication device may leave a coverage area of the first communication device or a LOS condition.

In an example, the method 100 may further comprise transmitting a message which offers relaying service to the second communication device. Thus, the second communication device can be informed about the possibility to use the first communication device as relay system.

In an example, the method 100 may further comprise transmitting the line-of-sight map or the dynamic line-of-sight map to the second communication device in a line-of-sight map message. Thus, the second communication device can be enabled to act as a relay system as well, without generating a LOS map. The line-of-sight map message may be specified for the transmission/receiving of a line-of-sight map. The line-of-sight map message may belong to the Intelligent Transportation Systems standard. For example, the line-of-sight map message may belong to a Cooperative Perception data.

Examples may be compliant to or even comprised in certain standard specifications, such as those specified by the European Telecommunications Standards Institute (ETSI). The line-of-sight map message may be a container of a e.g. Cooperative Perception Message (CPM) or Cooperative Awareness Message (CAM). For example, the line-of-sight map message may be implemented into a CPM as defined in ETSI TR 103 562 V2.1.1 (Release 2) in clause 6. For example, the line-of-sight map message may be implemented into a CAM as defined in ETSI EN 302 637-2 V1.3.1 in clause 7.

The line-of-sight map message may be an extension of a MapData(MAP)/Road/lane topology and traffic maneuver message and/or a signal phase and timing (SPaT) message to include nodes and line-of-sight. For example, the line-of-sight map message may be implemented into a MAP message as defined in ISO/TS 19091:2019 in clause 3.28 and/or in a SPaT message as defined in ISO/TS 19091:2019 in clause 3.44. For example, the line-of-sight map may be implanted into a MAP message and/or a Road/lane topology and traffic maneuver message (MAPEM) and/or a SPaT message (SPATEM) as defined in ETSI TR 103 099 V1.4.1 in clause 8.

The line-of-sight map message may be a content exchanged within an HD-map. The line-of-sight map message may be a container of a node map.

In an example, the method 100 may further comprise receiving a relaying request from the second communication device and acting as a relay system for the second communication device.

The communication that occurs before a connection as relay system is establish, and that may be used to provide said messages about offered relay service or received relay request, may be based on broadcasts of the first communication device and the second communication device, e.g., via the mobile communication system. Accordingly, the first communication device and the second communication device, and in particular the at least one interface of each, may be suitable for, or configured to, communicate in/via the mobile communication system and/or the vehicular communication system. For example, the first communication device and the second communication device, and in particular the at least one interface, may be configured to communicate via one or more antennas via the mobile communication system. Additionally, the first communication device and the second communication device, and in particular the at least one interface of each, may be configured to communicate via short-range communication, e.g., via a wireless local area network according to a variant of the IEEE 802.11 standard, via Bluetooth or via UWB.

A connection between the first communication device and the second communication device may be a wireless connection, e.g. a mmWave-based connection over the mobile communication system (e.g., using carrier frequencies of at least 20 GHz) or may be performed at lower carrier frequencies, e.g. using carrier frequencies of at most 7.5 GHz. For example, the wireless connection between the first communication device and the second communication device may be initiated using the protocols of the mobile communication system, or using a short-range communication system, such as via a wireless local area network outlined above.

As is evident from the above example, while the communication between first communication device and the second communication device primarily occurs via the mobile communication system, additional communication may occur via a vehicular communication system. Such communication may be carried out directly, e.g. by means of Device-to-Device (D2D) communication. Such communication may be carried out using the specifications of the vehicular communication system. An example of D2D is direct communication between vehicles, also referred to as Vehicle-to-Vehicle communication (V2V) or Vehicle-to-Everything (V2X), car-to-car, Dedicated Short Range Communication (DSRC), respectively. Technologies enabling such D2D-communication include 802.11p, 3GPP systems (4G, 5G, NR and beyond), etc.

The first communication device may communicate in the mobile communication system with a base station, which may belong to the plurality of communication devices. For example, the first communication device and the base station may communicate in/via a mobile communication system. The mobile communication system may comprise a plurality of transmission points and/or base stations operable to communicate radio signals with the first communication device and the second communication device. In an example, the mobile communication system may comprise the first communication device and the second communication device.

In some examples, the first/second communication devices may also act as a small cell base station, e.g., as a pico cell or femto cell base station. In some examples, the first/second communication devices may act as signal relay between the first communication device or the second communication device and a third communication device, e.g., a base station. In some examples, the first/second communication devices may support simultaneous connections to multiple base stations (of the same or different mobile network operators) and/or simultaneous connections to the same base station over multiple radio access technologies (e.g. a mmWave-based and a sub-6 GHz-based connection at the same).

A base station can be located in the fixed or stationary part of the network or system. A base station may correspond to a remote radio head, a transmission point, an access point, a macro cell, a small cell, a micro cell, a pico cell, a femto cell, a metro cell etc. The term small cell may refer to any cell smaller than a macro cell, i.e. a micro cell, a pico cell, a femto cell, or a metro cell. Moreover, a femto cell is considered smaller than a pico cell, which is considered smaller than a micro cell. A base station can be a wireless interface of a wired network, which enables transmission and reception of radio signals to the first communication device and/or the second communication device. Such a radio signal may comply with radio signals as, for example, standardized by 3GPP or, generally, in line with one or more of the above listed systems. Thus, a base station may correspond to a NodeB, an eNodeB, a BTS, an access point, etc. The first communication device and/or the second communication may correspond to an intermediate network node in the communication path between a base station and the first/second communication device. The first communication device may forward a signal received from the second communication device (or vice versa) to a base station and vice versa.

For example, the first communication device may transmit periodically a relay system available message (RSAM). The RSAM may be transmitted to any communication device in a coverage area of the first communication device. For example, the second communication device can receive the RSAM without belonging to the plurality of communication devices. For example, the RSAM may depend on an update of the LOS map, e.g., after every update of the LOS map.

Optionally, the first communication device may start the periodically transmission only if a predefined parameter is fulfilled, e.g. a minimum distance between the first communication device and the second communication device is reached (e.g., the second communication device belongs to the plurality of communication devices, and thus the first communication device knows the position of the second communication device).

For example, the relaying request may be an authorization request message (ARM). The ARM from the second communication device may be required for the first communication device to grant access to that specific second communication device and to act as relay system for the second communication device. For example, the second communication device may repeat periodically a transmission of the ARM addressed to the first communication device after receiving the RSAM.

Optionally or alternatively, the second communication device may start the transmission of the ARM manually, e.g. at a user's request. For example, the first communication device can be informed by the ARM that a relay system is requested and may perform the method as described above (generating a (dynamic) LOS map) and may offer the second communication device a relay service if available based on the (dynamic) LOS map. So, the generation of the (dynamic) LOS map may be triggered by the ARM of the second communication device.

Further, the ARM may comprise information about requested services of the first communication device. This may lead to a transmission of the AGM for services an access is granted and/or a transmission of the ADM for services an access is denied.

The first communication device may issue an AGM to specific second communication device, as a response to previously received ARMs or other inputs from the Authorization Protocol, to inform these specific UEs about the conditions of their granted access to the first communication device. The AGM may comprise information about permanent, temporal or location-based authorization (grant) of a second communication device. For example, the location-based authorization may be based on a coverage area and/or on LOS conditions of/to the first communication device. Optionally, the AGM may comprise information about a limit or increase access capabilities (e.g. to time-frequency resource) and/or information to modify temporal or location-based access conditions. The AGM/ADM may be conditioned by the time-frequency resources allocated for the first communication device.

The first communication device may issue an ADM to specific second communication device, as a response to previously received ARMs or other inputs from the Authorization Protocol, to inform these specific second communication device about the conditions of their denied access to the first communication device. Denial of access of an existing authorized communication device, conditions of which may be shared in the ADM. For example, an unauthorized communication device may have no access to the time-frequency resources allocated for the first communication device. By transmitting the AGM/ADM by the first communication device the second communication device can be informed about a status of the authorization request. For example, the second communication device may terminate the periodically transmission of the ARM after receiving AGM or the ADM.

In an example, the information (e.g., the dynamic information) about the environment and/or the plurality of communication devices may be obtained by determining (dynamic) information about the environment and/or the plurality of communication devices using one or more sensors of the first communication device and/or receiving (dynamic) information about the environment, e.g., from a communication device of the plurality of communication devices. For example, the (dynamic) information about the environment/plurality of communication devices may be received from a communication device of the communication system, e.g., from the second communication device, a vehicle, an infrastructure, a smartphone, a base station etc. For example, the one or more sensors may belong to a wide variety of communication device sensors, e.g. a radar sensor, a lidar sensor, automotive radar, ultrasound sensor or a vision-related sensor such as camera or infrared sensors.

For example, measurement data of the one or more sensors of the first communication device may be combined with received information about the environment. For example, the received information may provide information about immobile obstacles/communication devices and the measurement data may provide information about mobile obstacles/communication device. Thus, a determination using one or more sensors may be eased (since solely mobile obstacles may be needed to be determined) and/or an effort using the one or more sensors may be decreased. Optionally or alternatively, the data of the immobile obstacles/communication devices may be used to verify determined immobile obstacles/communication devices using the one or more sensors.

For example, the first communication device may be equipped with techniques that can interpret Cooperative Perception data (such as Cooperative Perception Messages (CPM), Cooperative Awareness Message (CAM)) received from other road agents (other vehicles, pedestrians, infrastructure, back-end applications), which may be frequently updated in a periodical or event-triggered fashion. Further, the first communication device may be capable of fusing the data obtained with its sensing device (the one or more sensors) and the data received (e.g., received via CPM) to build the (dynamic) LOS map.

For example, the first communication device generates a static LOS map of the plurality of communication devices. Therefore, a position of each communication device can be obtained using, e.g., CAM, a data base (e.g., comprising all base stations), from its own environmental model/perception, from HD maps. Further, a calculation of a direction and distance from the first communication device towards each communication device of the plurality of communication devices can be performed, e.g. using spherical coordinates. To generate a dynamic LOS map the first communication device may observes and/or receives the characteristic of all communication device in its environment, e.g., a current position, a movement speed, a moving direction, using e.g., user trajectories, pedestrian via their smartphones etc. The dynamic LOS map may be generated on top of the LOS map. Thus, a static/dynamic LOS map (SD-LOS map) can be generated.

Further, the first communication device may determine LOS condition to the other communication devices considering moving obstacles/communication devices which might lead to a non-LOS condition in the future. This may be performed by the use of sensors of the first communication device, e.g., radar, LIDAR etc., to determine LOS/non-LOS conditions. The first communication device may predict the future characteristics to all communication devices and its future SD-LOS-Map. The first communication device may predict the duration of LOS condition to all node based on the SD-LOS map and add this into the map.

For example, the first communication device may share the SD-LOS map with at least on other communication device, enabling this to offer/request services as/of relay system based on the SD-LOS map. Further, the first communication device may share its own position (e.g., a position of its transceiver unit, because this may be not included into the SD-LOS map). A communication node which may receive the SD-LOS map from the first communication device can then be enabled to act as and/or use the first communication device as relay system for a duration estimated by the SD-LOS map of the first communication node.

The first/second communication device may be further capable of performing predictions on the environmental model based on e.g. intention data received from other road agents (e.g., a planned route of another vehicle), generating the dynamic LOS map. Further, the first/second communication device may use the dynamic LOS map to predict future LOS conditions, e.g., by extrapolating current LOS conditions.

For example, the first/second communication device may predict a visibility state between the first communication device and the

In an example, the method 100 may further comprise forming a beam for communication between the first communication device and at least one communication device of the plurality of communication devices and/or the second communication device. For example, for a determined position of the second communication device a narrow beam directed towards the second communication device can be formed. Thus, a transmission power can be decreased.

In an example, the method 100 may further comprise forming a beam for communication each between the first communication device and at least one communication device of the plurality of communication devices and the first communication and/or the second communication device.

For example, the method 100 may further comprise adapting the beam based on the dynamic LOS map. For, example a spatial angle, a spatial domain, a transmission power, a beam form, a chosen antenna of a plurality of antennas for beamforming may be adapted. For example, if the second communication approaches the first communication device a transmission power can be decreased.

In an example, the method 100 may further comprise determining a predicted duration for the acting as the relay system and transmitting information about the predicted duration to the second communication device. Thus, the second communication device can be informed about the relay service and an availability of the relay service.

More details and aspects are mentioned in connection with the embodiments described above and/or below. The example shown in Fig. 1 may comprise one or more optional additional features corresponding to one or more aspects mentioned in connection with the proposed concept or one or more examples described below (e.g. Fig. 2 - 5).

Fig. 2 shows another example of a method 200 for a communication device. The method 200 comprises receiving 210 a line-of-sight map or a dynamic line-of-sight map and transmitting

220 a message which offers relaying service to a second communication device based on the line-of-sight map. The line-of-sight map or dynamic line-of-sight map may be received by receiving a line-of-sight map message. For example, the line-of-sight map message may comprise the line-of-sight map and/or the dynamic line-of-sight map. Thus, the communication device can be enabled to offer relay service to further communication device in a mobile communication system without generating a (dynamic) LOS map. For example, a traffic light comprising a communication device may receive the (dynamic) LOS map and can offer relay services for all communication devices in a coverage range and fulfilling LOS conditions. Thus, a vehicle waiting at a cross section at this traffic light may use a base station in a perpendicular street without LOS condition between the vehicle and the base station by using the traffic light as relay system.

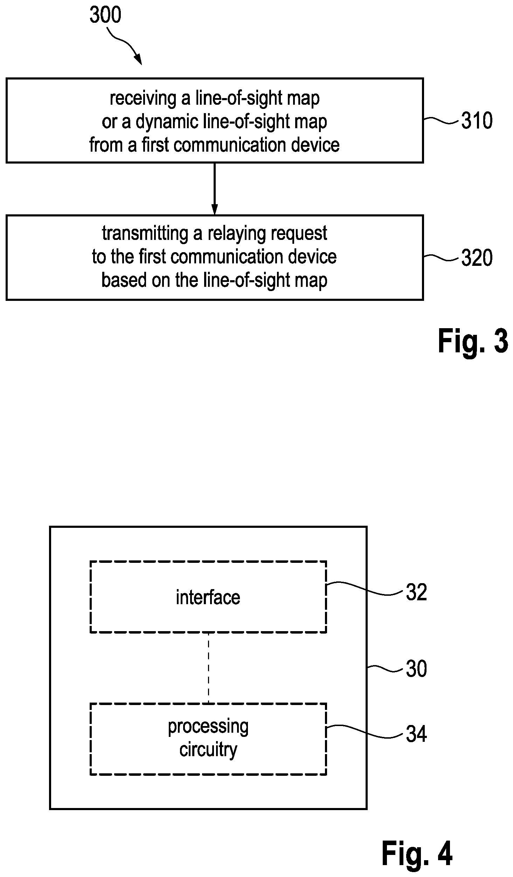

More details and aspects are mentioned in connection with the embodiments described above and/or below. The example shown in Fig. 2 may comprise one or more optional additional features corresponding to one or more aspects mentioned in connection with the proposed concept or one or more examples described above (Fig. 1) and/or below (e.g. Fig. 3 - 6).

Fig. 3 shows another example of a method 300 for a second communication device. The method 300 comprises receiving 310 a line-of-sight map or a dynamic line-of-sight map from a first communication device and transmitting a relaying request to the first communication device based on the line-of-sight map. The line-of-sight map or dynamic line-of-sight map may be received by receiving a line-of-sight map message. For example, the line-of-sight map message may comprise the line-of-sight map and/or the dynamic line-of-sight map.

In an example, the method 300 may further comprise receiving a second line-of-sight map or a dynamic line-of-sight map (e.g. via a second line-of-sight map message) from a third communication device and deciding whether a relaying request is transmitted to the first communication device and/or to the third communication device. Thus, the communication device may choose a communication device for acting as relay system.

Optionally or alternatively, the second communication device may decide based on the (dynamic) LOS map which further communication device in an environment of the second communication device may be the most suitable (or second most suitable etc.) for acting as relay system and may transmit an ARM to this further communication device. The further communication device can be different from the first communication device or third communication device.

More details and aspects are mentioned in connection with the embodiments described above and/or below. The example shown in Fig. 3 may comprise one or more optional additional features corresponding to one or more aspects mentioned in connection with the proposed concept or one or more examples described above (Fig. 1 - 2) and/or below (e.g. Fig. 4 - 5).

Fig. 4 shows a block diagram of an apparatus 30. The apparatus 30 comprises one or more interfaces 32 configured to communicate with a wireless base station, user equipment and/or mobile relay system. The apparatus 30 further comprises processing circuitry 34 configured to control the one or more interfaces and to perform the method for a (first) communication device as described above (e.g. Fig.1 - 3).

For example, the apparatus 30 can be the first communication device, where the interface is configured to communicate with the second communication device. Alternatively, the apparatus 30 can be the second communication device, where the interface 32 is configured to communicate with the first communication device.

As shown in Fig. 4 the respective one or more interfaces 32 are coupled to the respective processing circuitry 34 at the apparatus 30. In examples the processing circuitry 34 may be implemented using one or more processing units, one or more processing devices, any means for processing, such as a processor, a computer or a programmable hardware component being operable with accordingly adapted software. Similar, the described functions of the processing circuitry 34 may as well be implemented in software, which is then executed on one or more programmable hardware components. Such hardware components may comprise a general-purpose processor, a Digital Signal Processor (DSP), a micro-controller, etc. The processing circuitry 34 is capable of controlling the interface 32, so that any data transfer that occurs over the interface and/or any interaction in which the interface may be involved may be controlled by the processing circuitry 34.

In an embodiment the apparatus 30 may comprise a memory and at least one processing circuitry 34 operably coupled to the memory and configured to perform the below mentioned method.

In examples the one or more interfaces 32 may correspond to any means for obtaining, receiving, transmitting or providing analog or digital signals or information, e.g. any connector, contact, pin, register, input port, output port, conductor, lane, etc. which allows providing or obtaining a signal or information. An interface may be wireless or wireline and it may be configured to communicate, i.e. transmit or receive signals, information with further internal or external components. The one or more interfaces 32 may comprise further components to enable communication between vehicles. Such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc.

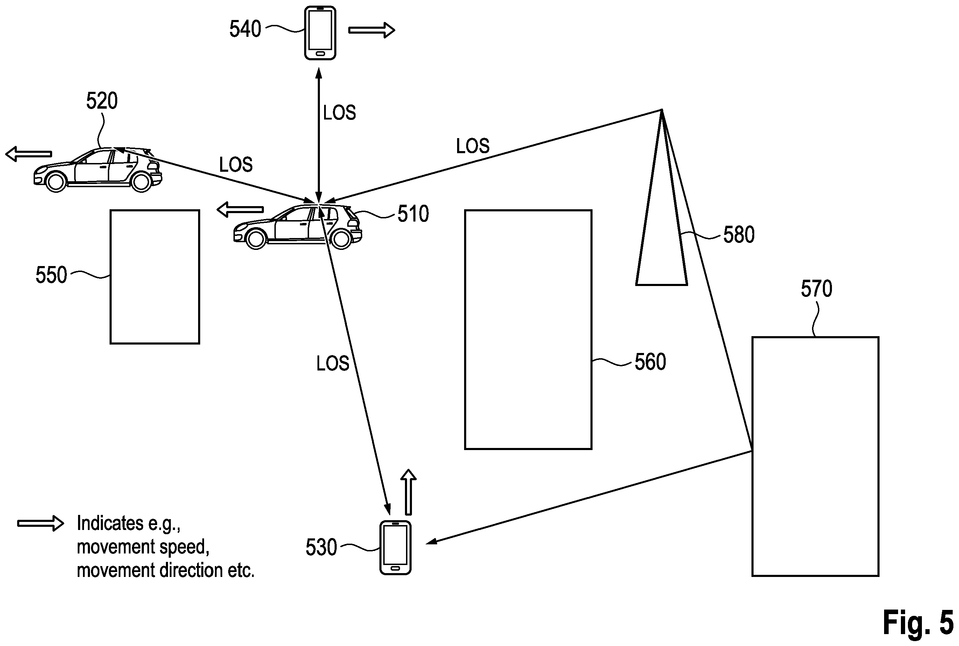

More details and aspects are mentioned in connection with the embodiments described above and/or below. The example shown in Fig. 4 may comprise one or more optional additional features corresponding to one or more aspects mentioned in connection with the proposed concept or one or more examples described above (Fig. 1 - 3) and/or below (e.g. Fig. 5).

Fig. 5 shows an example of a usage of a LOS map. In an example, the vehicle 500 comprises the apparatus described with reference to Fig. 4. For example, the apparatus can be comprised by a vehicle 510, 520 or a smartphone 530, 540. The users of the vehicles 510, 520 and smartphones 530, 540 may want to use services of the communication devices requiring a connection to the base station 580. This connection may be impacted by obstacles 550, 560, 570, especially with impact on LOS conditions.

Intelligent Transportation Systems (ITS) can be enabled by connected vehicles 510, 520 to improve safety and efficiency in roadways. In order to provide wireless access in vehicular environments, a wireless Access Vehicular Environment (WAVE) system architecture is provided. A WAVE system can consist of roadside units (RSUs). The RSUs and mobile terminals may form WAVE basic service sets (WBSSs) connected to the Wide Area Network (WAN) via an appropriate portal. Also, the Wireless Access in Vehicular Environments (WAVE) architecture and standards can support ITS safety and non-safety applications. The WAVE standards can be based on IEEE 802.1 I p (e.g. Dedicated Short Range Communications "DSRC"), to support Vehicle-to-Anything (V2X) communications, which can include V2X communication for vehicle-to-Anything (V2I), Vehicle-to-vehicle (V2V), and Vehicle-to-person/pedestrian (V2P) communications.

The DSRC/802.11p can support short-range and low power communication in the 5.9GHz spectrum, which has been dedicated for ITS. However, some ITS applications can use the deployment of DSRC/802.11p based Road Side Units (RSU), which can impose scalability and deployment cost challenges. Despite of the standards and dedicated spectrum, DSRC/802.11 p based ITS applications have not been widely deployed.

Existing cellular systems, such as third generation partnership project (3GPP) long term evolution (LTE), can be used as an alternative to DSRC/802.11 p given its large scale coverage and efficient spectrum utilization. However, one of the issues in 3GPP LTE is that the system was mostly developed for IP communication over the Internet. Also, cellular systems lack the capability to enable direct communication between devices V2X devices within a relatively short range, such as, for example, between 50 to 350 meters (m) with low latency. Proximity-based Service (ProSe) can be utilized in a UE, an evolved Node B (eNB) and a mobility management entity (MME) in wireless communications systems. That is, ProSe can be utilized for UE to UE (or D2D).

Various services can be provided through V2X communication. An ITS of a vehicle 510, 520 performing the V2X communication can provide various services for traffic safety and efficiency. All these services need in principle a LOS condition, because of the high damping of the used frequency bands. Thus, the generation of a LOS map to provide LOS conditions using communication devices as relay system may improve ITS performance significantly. Further, the LOS map can also be used for other communication device like smartphones 530, 540, smart watches etc. to improve their network reception.

For example, the vehicle 510, 520 may be a land vehicle, such a road vehicle, a car, an automobile, an off-road vehicle, a motor vehicle, a bus, a robo-taxi, a van, a truck or a lorry. Alternatively, the vehicle 400 may be any other type of vehicle, such as a train, a subway train, a boat or a ship. For example, the proposed concept may be applied to public transportation (trains, bus) and future means of mobility (e.g., robo-taxis).

As shown in Fig. 5, the vehicles 510 and 520 and the smartphone 540 may have a LOS condition to the base station 580. However, e.g. the vehicle 510 may be out of a coverage area of the base station 580 and the base station 580 may be out of a coverage area of the smartphone 540. Thus, only the vehicle 510 can establish a connection to the base station 580. Further, the smartphone 530 has no LOS condition to the base station 580, thus it cannot establish a reliable connection to the base station 580. For example, the smartphone 530 is aware of the base station 580, due to a non-LOS condition, but the non-LOS condition is not satisfactory for the smartphone 530. Thus the smartphone 530 may desire LOS condition to steer its beam towards a node which can relay to the base station 580. Thus, the smartphone 530 may transmit an ARM, which can be received by the vehicle 510. The vehicle may perform the method as described above (e.g., triggered by the ARM) and generates a LOS map, e.g., comprising the smartphones 530, 540, the vehicle 520 and the base station 580. Based on this LOS map the vehicle 510 may transmit information on LOS condition to the other communication devices. For example, the vehicle 510 may inform (e.g., using a RSAM or AGM) the vehicle 520 about a LOS condition with a duration of 3 s and about spherical coordinates from both vehicles 510, 520; the smartphone 530 about a LOS condition with a duration of 7 s and about spherical coordinates from itself and the smartphone 530; the smartphone 540 about a LOS condition with a duration of 10 s and about spherical coordinates from itself and the smartphone 540; the base station 580 about a LOS condition with a duration of 8 s and about spherical coordinates from itself and the base station 580. The smartphone 530 can determine based on this information, that it can use the vehicle 510 as relay system to establish a connection with the base station 580 for maximal 7 s. If the relaying duration of 7s is sufficient for the smartphone 530 it may relay information through to the base station 580 using the vehicle 510. In addition, the smartphone may already know to which direction it has to steer its beam to find the transceiver of the vehicle 510, as it is provided by vehicle 510 (e.g., using RSAM or AGM).

For example, multi-hop can be used to enhance a duration of a relaying connection. For example, the vehicle 520 may have a LOS condition for 15 s with the vehicle 510, the vehicle 510 may have a LOS condition with the base station 580 for 8 s, the smartphone 520 may have a LOS condition with the base station 580 for 20 s (since it approaches the base station 580) and the vehicle 510 may have a LOS condition with the smartphone 540 for 12 s. Thus, the vehicle 520 can use for 12 s the vehicle 510 as relay system, since the vehicle 510 can establish a direct connection with the base station 580 for 8 s and can establish an indirect connection with the base station 580 using the smartphone 540 as relay system for another 4 s. Thus, the vehicle 520 may be connected to the base station 580 for 4 s via multi-hoping using two relay system.

More details and aspects are mentioned in connection with the embodiments described above. The example shown in Fig. 5 may comprise one or more optional additional features corresponding to one or more aspects mentioned in connection with the proposed concept or one or more examples described above (e.g. Fig. 1 - 4).

The aspects and features described in relation to a particular one of the previous examples may also be combined with one or more of the further examples to replace an identical or similar feature of that further example or to additionally introduce the features into the further example.

Examples may be compliant to or even comprised in certain standard specifications, such as those specified by the 3GPP. Configuration information may for example be communicated using signaling radio bearers, e.g. by means of Radio Resource Control (RRC) messages, which are, for example, specified in the *.331 series of 3GPP as layer 3 control plane messages. For example, physical layer specification, e.g. by means of Doppler Delay Resolutions and other physical layer specifications may also be affected by present embodiments, e.g. *.201, *.211, *.212, *.213, *.214, *.216 series in the 3GPP specifications.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

If some aspects have been described in relation to a device or system, these aspects should also be understood as a description of the corresponding method and vice versa. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

## Claims

1. A method (100) performed by a first communication device for line-of-sight communication, in a cellular communication system comprising at least a second communication device, comprising
obtaining (110) positions of a plurality of communication devices in an environment of the first communication device;
obtaining (120) information about the environment of the first communication device; and
generating (130) a line-of-sight map using the positions of the plurality of communication devices and the information about the environment, the LOS map indicative of LOS communication paths between the plurality of communication devices, which can be used to determine which communication devices can act as relays.

2. The method (100) according to claim 1, further comprising
obtaining dynamic information of at least one communication device of the plurality of communication devices and/or of the first communication device; and
generating a dynamic line-of-sight map using the positions of the plurality of communication devices, the information about the environment and the dynamic information, the dynamic map depending on and/or varying with a time.

3. The method (100) according to claim 1 or 2, further comprising
transmitting a message which offers relaying service to the second communication device.

4. The method (100) according to any of preceding the claims, further comprising
transmitting the line-of-sight map or the dynamic line-of-sight map to the second communication device in a line-of-sight map message.

5. The method (100) according to any of preceding the claims, further comprising
receiving a relaying request from the second communication device; and
acting as a relay system for the second communication device.

6. The method (100) according to any of the preceding claims, wherein
information about the environment and/or the plurality of communication devices is obtained by
determining information about the environment and/or the plurality of communication devices using one or more sensors of the first communication device; and/or receiving information about the environment.

7. The method (100) according to any of the preceding claims, further comprising forming a beam for communication between the first communication device and at least one communication device of the plurality of communication devices and/or the second communication device.

8. The method (100) according to any of claims 5 - 7, further comprising forming a beam for communication each between the first communication device and at least one communication device of the plurality of communication devices and the first communication and/or the second communication device.

9. The method (100) according to any of claims 5 - 8, further comprising
determining a predicted duration for the acting as the relay system; and
transmitting information about the predicted duration to the second communication device.

10. A method (300) performed by a communication device for line-of-sight communication, comprising
receiving (310) a line-of-sight map or a dynamic line-of-sight map from a first communication device, the LOS map indicative of LOS communication paths between a plurality of communication devices in an environment of the first communication device, which can be used to determine which communication devices can act as relays; and
transmitting (320) a relaying request to the first communication device based on the line-of-sight map.

11. The method (300) according to claim 10, further comprising
receiving a second line-of-sight map or a dynamic line-of-sight map from a third communication device; and
deciding whether a relaying request is transmitted to the first communication device and/or to the third communication device.

12. An apparatus (30), comprising:
one or more interfaces (32) configured to communicate with a wireless base station and/or user equipment; and
processing circuitry (34) configured to control the one or more interfaces (32) and to:
perform the method according to any one of claims 1 - 11.

13. A vehicle (510; 520) comprising the apparatus (30) according to claim 12.

14. A computer program having a program code for performing the method according to any one of claims 1 - 11, when the computer program is executed on a computer, a processor, or a programmable hardware component.

## Patentansprüche

1. Verfahren (100), das durch eine erste Kommunikationsvorrichtung für Sichtlinienkommunikation in einem Mobilfunk-Kommunikationssystem, umfassend mindestens eine zweite Kommunikationsvorrichtung, durchgeführt wird, umfassend
Erhalten (110) von Positionen einer Vielzahl von Kommunikationsvorrichtungen in einer Umgebung der ersten Kommunikationsvorrichtung;
Erhalten (120) von Informationen über die Umgebung der ersten Kommunikationsvorrichtung; und Erzeugen (130) einer Sichtlinienkarte unter Verwendung der Positionen der Vielzahl von Kommunikationsvorrichtungen und der Informationen über die Umgebung, die LOS-Karte hinweisend auf LOS-Kommunikationspfade zwischen der Vielzahl von Kommunikationsvorrichtungen, wobei sie verwendet werden kann, um zu bestimmen, welche Kommunikationsvorrichtungen als Relais fungieren können.

2. Verfahren (100) nach Anspruch 1, ferner umfassend
Erhalten dynamischer Informationen mindestens einer Kommunikationsvorrichtung der Vielzahl von Kommunikationsvorrichtungen und/oder der ersten Kommunikationsvorrichtung; und
Erzeugen einer dynamischen Sichtlinienkarte unter Verwendung der Positionen der Vielzahl von Kommunikationsvorrichtungen, der Informationen über die Umgebung und der dynamischen Informationen, wobei die dynamische Karte von einer Zeit abhängt und/oder mit dieser variiert.

3. Verfahren (100) nach Anspruch 1 oder 2, ferner umfassend
Übertragen einer Nachricht, die der zweiten Kommunikationsvorrichtung Relais-Dienst anbietet.

4. Verfahren (100) nach einem der vorstehenden Ansprüche, ferner umfassend Übertragen der Sichtlinienkarte oder der dynamischen Sichtlinienkarte in einer Sichtlinienkartennachricht an die zweite Kommunikationsvorrichtung.

5. Verfahren (100) nach einem der vorstehenden Ansprüche, ferner umfassend Empfangen einer Relais-Anforderung von der zweiten Kommunikationsvorrichtung; und Fungieren als ein Relais-System für die zweite Kommunikationsvorrichtung.

6. Verfahren (100) nach einem der vorstehenden Ansprüche, wobei
Informationen über die Umgebung und/oder die Vielzahl von Kommunikationsvorrichtungen erhalten werden durch
Bestimmen von Informationen über die Umgebung und/oder die Vielzahl von Kommunikationsvorrichtungen unter Verwendung eines oder mehrerer Sensoren der ersten Kommunikationsvorrichtung; und/oder Empfangen von Informationen über die Umgebung.

7. Verfahren (100) nach einem der vorstehenden Ansprüche, ferner umfassend
Ausbilden eines Strahls für Kommunikation zwischen der ersten Kommunikationsvorrichtung und mindestens einer Kommunikationsvorrichtung der Vielzahl von Kommunikationsvorrichtungen und/oder der zweiten Kommunikationsvorrichtung.

8. Verfahren (100) nach einem der Ansprüche 5 bis 7, ferner umfassend
Ausbilden eines Strahls für Kommunikation jeweils zwischen der ersten Kommunikationsvorrichtung und mindestens einer Kommunikationsvorrichtung der Vielzahl von Kommunikationsvorrichtungen und der ersten Kommunikationsvorrichtung und/oder der zweiten Kommunikationsvorrichtung.

9. Verfahren (100) nach einem der Ansprüche 5 bis 8, ferner umfassend
Bestimmen einer vorhergesagten Dauer für das Fungieren als das Relais-System; und Übertragen von Informationen über die vorhergesagte Dauer an das zweite Kommunikationsvorrichtung.

10. Verfahren (300), das durch eine Kommunikationsvorrichtung für Sichtlinienkommunikation durchgeführt wird, umfassend
Empfangen (310) einer Sichtlinienkarte oder einer dynamischen Sichtlinienkarte von einer ersten Kommunikationsvorrichtung, die LOS-Karte hinweisend auf LOS-Kommunikationspfade zwischen einer Vielzahl von Kommunikationsvorrichtungen in einer Umgebung der ersten Kommunikationsvorrichtung, wobei sie verwendet werden kann, um zu bestimmen, welche Kommunikationsvorrichtungen als Relais fungieren können; und
Senden (320) einer Relais-Anforderung an die erste Kommunikationsvorrichtung basierend auf der Sichtlinienkarte.

11. Verfahren (300) nach Anspruch 10, ferner umfassend
Empfangen einer zweiten Sichtlinienkarte oder einer dynamischen Sichtlinienkarte von einer dritten Kommunikationsvorrichtung; und
Entscheiden, ob eine Relais-Anforderung an die erste Kommunikationsvorrichtung und/oder an die dritte Kommunikationsvorrichtung übertragen wird.

12. Einrichtung (30), umfassend:
eine oder mehrere Schnittstellen (32), die konfiguriert sind, um mit einer drahtlosen Basisstation und/oder Benutzereinrichtung zu kommunizieren; und
Verarbeitungsschaltlogik (34), die konfiguriert ist, um die eine oder die mehreren Schnittstellen (32) zu steuern und das Verfahren nach einem der Ansprüche 1 bis 11 durchzuführen.

13. Fahrzeug (510, 520), umfassend die Einrichtung (30) nach Anspruch 12.

14. Computerprogramm, das einen Programmcode zum Durchführen des Verfahrens nach einem der Ansprüche 1 bis 11 aufweist, wenn das Computerprogramm auf einem Computer, einem Prozessor oder einer programmierbaren Hardwarekomponente ausgeführt wird.

## Revendications

1. Procédé (100) réalisé par un premier dispositif de communication pour une communication en visibilité directe, dans un système de communication cellulaire comprenant au moins un deuxième dispositif de communication, comprenant
l'obtention (110) de positions d'une pluralité de dispositifs de communication dans un environnement du premier dispositif de communication ;
l'obtention (120) d'informations sur l'environnement du premier dispositif de communication ; et la génération (130) d'une carte de visibilité directe à l'aide des positions de la pluralité de dispositifs de communication et des informations sur l'environnement, la carte de visibilité directe indiquant des trajets de communication en visibilité directe entre la pluralité de dispositifs de communication, qu'il est possible d'utiliser pour déterminer quels dispositifs de communication peuvent servir de relais.

2. Procédé (100) selon la revendication 1, comprenant en outre
l'obtention d'informations dynamiques d'au moins un dispositif de communication de la pluralité de dispositifs de communication et/ou du premier dispositif de communication ; et
la génération d'une carte dynamique de visibilité directe à l'aide des positions de la pluralité de dispositifs de communication, des informations sur l'environnement et des informations dynamiques, la carte dynamique dépendant du temps et/ou variant en fonction de celui-ci.

3. Procédé (100) selon la revendication 1 ou 2, comprenant en outre
la transmission d'un message qui offre un service de relais au deuxième dispositif de communication.

4. Procédé (100) selon l'une quelconque des revendications précédentes, comprenant en outre la transmission de la carte de visibilité directe ou de la carte de visibilité directe dynamique au deuxième dispositif de communication dans un message de carte de visibilité directe.

5. Procédé (100) selon l'une quelconque des revendications précédentes, comprenant en outre la réception d'une demande de relais de la part du deuxième dispositif de communication ; et l'action en tant que système de relais pour le deuxième dispositif de communication.

6. Procédé (100) selon l'une quelconque des revendications précédentes, dans lequel
les informations sur l'environnement et/ou la pluralité de dispositifs de communication sont obtenues par
la détermination d'informations sur l'environnement et/ou la pluralité de dispositifs de communication à l'aide d'un ou plusieurs capteurs du premier dispositif de communication ; et/ou la réception d'informations sur l'environnement.

7. Procédé (100) selon l'une quelconque des revendications précédentes, comprenant en outre
la formation d'un faisceau pour la communication entre le premier dispositif de communication et au moins un dispositif de communication de la pluralité de dispositifs de communication et/ou le deuxième dispositif de communication.

8. Procédé (100) selon l'une quelconque des revendication 5 à 7, comprenant en outre
la formation d'un faisceau pour la communication dans chaque cas entre le premier dispositif de communication et au moins un dispositif de communication de la pluralité de dispositifs de communication et le premier dispositif de communication et/ou le deuxième dispositif de communication.

9. Procédé (100) selon l'une quelconque des revendication 5 à 8, comprenant en outre
la détermination d'une durée prévue pour l'action en tant que système de relais ; et la transmission d'informations sur la durée prévue au deuxième dispositif de communication.

10. Procédé (300) réalisé par un dispositif de communication pour une communication en visibilité directe, comprenant
la réception (310) d'une carte de visibilité directe ou d'une carte de visibilité directe dynamique de la part d'un premier dispositif de communication, la carte de visibilité directe indiquant des trajets de communication en visibilité directe entre une pluralité de dispositifs de communication dans un environnement du premier dispositif de communication, qu'il est possible d'utiliser pour déterminer quels dispositifs de communication peuvent servir de relais ; et
la transmission (320) d'une demande de relais au premier dispositif de communication sur la base de la carte de visibilité directe.

11. Procédé (300) selon la revendication 10, comprenant en outre
la réception d'une seconde carte de visibilité directe ou d'une carte de visibilité directe dynamique de la part d'un troisième dispositif de communication ; et
le fait de décider si une demande de relais est transmise au premier dispositif de communication et/ou au troisième dispositif de communication.

12. Appareil (30) comprenant :
une ou plusieurs interfaces (32) configurées pour communiquer avec une station de base sans fil et/ou un équipement d'utilisateur ; et
une circuiterie de traitement (34) configurée pour commander la ou les interfaces (32) et pour : réaliser le procédé selon l'une quelconque des revendications 1 à 11.

13. Véhicule (510 ; 520) comprenant l'appareil (30) selon la revendication 12.

14. Programme informatique ayant un code de programme permettant de réaliser le procédé selon l'une quelconque des revendications 1 à 11, lorsque le programme informatique est exécuté sur un ordinateur, un processeur, ou un composant matériel programmable.
